# EUROPÄISCHE PATENTANMELDUNG

(11) **EP 0 668 193 A2**
(43) Veröffentlichungstag der Anmeldung: **23.08.1995**
(21) Anmeldenummer: 94120890.2
(22) Anmeldetag: 29.12.1994
(51) Int. Cl.: B60R 19/30, B60R 19/32

(54) **Stossdämpfer**

(30) Priorität: 16.02.1994 DE 4404863
(71) Anmelder: Schneegans GmbH, D-46446 Emmerich (DE)
(72) Erfinder: Schneegans, Oskar, D-46446 Emmerich (DE)
(74) Vertreter: KEIL & SCHAAFHAUSEN Patentanwälte

(57) **Zusammenfassung**

© Es wird ein Stoßdämpfer (1) beschrieben, insbesondere für Stoßstangen von Kraftfahrzeugen oder dgl. mit zwei gegeneinander verschiebbaren Rohren (2, 3), von denen eines ein Stoßabsorptionselement (4) einschließt und über eine Aufnahmeplatte oder dgl. am Rahmen eines Kraftfahrzeuges oder dgl. befestigt ist, während das andere an der Stoßstange des Kraftfahrzeuges oder dgl. angebracht ist, wobei das Druckaufnahmerohr (2) unter Vorspannung mit dem Stoßstangenaufnahmerohr (3) verbunden ist und die Rohre mindestens bis zu einer vorbestimmten Kraft entlang eines vorbestimmten Weges gegeneinander verschiebbar sind, und wobei das Stoßabsorptionselement (4) mindestens bis zu der vorbestimmten Kraft verformbar ist. Um den Stoßdämpfer wesentlich leichter und einfach und kostengünstig herstellbar zu machen, ist vorgesehen, daß die beiden Rohre (2, 3) aus Kunststoff bestehen, daß das das Stoßabsorptionselement (4) einschließende Druckaufnahmerohr (2) auf das Stoßstangenaufnahmerohr (3) aufschiebbar ist und daß in der Innenwand (8) des Druckaufnahmerohres (2) eine Ausnehmung (9) ausgebildet ist, in die ein Vorsprung (12) des Stoßstangenaufnahmrohres (3) derart eingreift, daß die beiden Rohre (2, 3) unter Vorspannung miteinander verbunden sind.

## Beschreibung

Die Erfindung betrifft einen Stoßdämpfer, insbesondere für Stoßstangen von Kraftfahrzeugen oder dgl. mit zwei gegeneinander verschiebbaren Rohren, von denen eines - "Druckaufnahmerohr"- ein Stoßabsorptionselement, insbesondere ein Gummielement, einschließt und über eine Aufnahmeplatte oder dgl. am Rahmen eines Kraftfahrzeuges oder dgl. befestigt ist, während das andere - "Stoßstangenaufnahmerohr" - an der Stoßstange des Kraftfahrzeuges oder dgl. angebracht ist, wobei das Druckaufnahmerohr unter Vorspannung mit dem Stoßstangenaufnahmerohr verbunden ist und die Rohre mindestens bis zu einer vorbestimmten Kraft entlang eines vorbestimmten eges - "Federweg" - gegeneinander verschiebbar sind, und wobei das Stoßabsorptionselement mindestens zu der vorbestimmten Kraft verformbar ist.

Zur Aufnahme von Stoßenergie beim Aufprall eines Kraftfahrzeuges auf einen Gegenstand bei geringer Geschwindigkeit ist zwischen der Stoßstange des Kraftfahrzeuges und dessen Rahmen mindestens ein Stoßdämpfer angeordnet, der normmäßig vorgegebene Bedingungen erfüllen muß. So muß das mit ca. 1800 N vorgespannte Gummielement beim Aufprall eines Kraftfahrzeuges mit einer Geschwindigkeit von 4 km/h bei einer Fahrzeuglast von 800 bis 1000 kg einen Hub von 50 mm aufnehmen, ohne daß es zu einer irreversiblen Verformung der Stoßstange kommt. Über diesen auch als Federweg bezeichneten Hub muß der Stoßdämpfer die beim Aufprall auftretende Energie vernichten. Bei einem Aufprall mit höherer Geschwindigkeit ist der Stoßdämpfer hierzu nicht in der Lage, so daß er zerstört wird und zusammen mit der ebenfalls beschädigten bzw. zerstörten Stoßstange auszutauschen ist.

Die bekannten Stoßdämpfer bestehen aus zwei gegeneinander verschiebbaren Stahlrohren, zwischen denen ein Gummielement unter Vorspannung eingesetzt ist. Damit die beiden Stahlrohre entlang des Federweges gegeneinander verschoben werden können, sind sie durch Umbördeln od. dgl. unter Vorspannung miteinander verbunden. Derartige Stoßdämpfer aus Metallrohren wiegen insgesamt ca. 1400 g.

Aufgabe der vorliegenden Erfindung ist es daher, einen Stoßdämpfer der eingangs genannten Art zu schaffen, der ein wesentlich geringeres Gewicht aufweist und einfach und kostengünstig herstellbar ist.

Diese Aufgabe wird erfindungsgemäß dadurch gelöst, daß die beiden Rohre aus Kunststoff bestehen, daß das das Stoßabsorptionselement einschließende Druckaufnahmerohr auf das Stoßstangenaufnahmerohr aufschiebbar ist und daß in der Innenwand des Druckaufnahmerohres eine Ausnehmung ausgebildet ist, in die ein Vorsprung des Stoßstangenaufnahmerohres derart eingreift, daß die beiden Rohre unter Vorspannung miteinander verbunden sind.

Ein derartiger Stoßdämpfer wiegt bei gleicher Dimensionierung nur ca. 470 g und ist damit nur ca 1/3 so schwer wie die bekannten Stoßdämpfer aus Metallrohren. Diese Gewichtsersparnis ist bei Kraftfahrzeugen im Hinblick auf eine Energieeinsparung beträchtlich. Außerdem läßt sich der erfindungsgemäße Stoßdämpfer aus herkömmlichen geeigneten Kunststoffen nicht nur einfach herstellen, sondern durch die spezielle Ausgestaltung des Druckaufnahmerohres und des Stoßstangenaufnahmerohres auch bequem zusammenbauen.

Der Zusammenbau wird erfindungsgemäß dadurch vereinfacht, daß der am Stoßstangenaufnahmerohr ausgebildete Vorsprung so ausgebildet ist, daß seine hintere Kante mit einer eine Angriffskante bildenden Hinterschneidung in der Ausnehmung im Druckaufnahmerohr in Eingriff gelangt. Sowohl der Vorsprung in dem Stoßstangenaufnahmerohr als auch die Angriffskante in der Ausnehmung im Druckaufnahmerohr lassen sich bei der Herstellung der Kunststoffrohre in einem Arbeitsgang leicht herstellen.

Es hat sich als vorteilhaft erwiesen, daß der Vorsprung erfindungsgemäß am vorderen Endabschnitt des Stoßstangenaufnahmerohres ausgebildet ist. Damit ist eine einfache und sichere Führung des Stoßstangenaufnahmerohres in dem Drukkaufnahmerohr gewährleist.

Damit der Vorsprung nicht nur mit der Ausnehmung im Druckaufnahmerohr in Eingriff gelangt, sondern dort auch bei den erheblichen Kräften, die während des Betriebes von außen auf den Stoßdämpfer von außen einwirken, sicher in der Ausnehmung gehalten wird, ist gemäß einer bevorzugten Ausgestaltung der Erfindung vorgesehen, daß im Stoßstangenaufnahmerohr ein Stopfen eingesetzt ist, der den den Vorsprung aufweisenden Wandabschnitt des Stoßstangenaufnahmerohres, insbesondere dessen Endabschnitt nach außen in Eingriff mit der Angriffskante in der Ausnehmung im Druckaufnahmerohr hält.

Um den den Vorsprung aufweisenden Wandabschnitt des Stoßstangenaufnahmerohres während der Montage geringfügig nach innen drücken zu können, damit das Druckaufnahmerohr so weit über das Stoßstangenaufnahmerohr geschoben werden kann bis der Vorsprung mit der Ausnehmung in dem Druckaufnahmerohr in Eingriff gelangt, wird der Stopfen zweckmäßigerweise erst nach einem Zusammenfügen der beiden Rohre in seine bestimmungsgemäße Lage gebracht. Hierzu ist im hinteren T-förmigen Abschlußstück des Stoßstangenaufnahmerohres erfindungsgemäß eine Montageöffnung für den Stopfen ausgebildet. Durch diese Montageöffnung läßt sich der Stopfen nach vorne bis in seine Endlage schieben, in der er die Endabschnitte des Stoßstangenaufnahmerohres auseinandergedrückt und damit den Vorsprung in der Ausnehmung in dem Druckaufnahmerohr in Eingriff hält.

Das Verschieben des Stopfens in dem Stoßstangenaufnahmerohr wird dadurch erleichert, daß der Stopfen erfindungsgemäß leicht konisch ausgebildet ist. Gemäß einer zweckmäßigen Ausgestaltung der Erfindung ist der Stopfen ein Kunststoffstopfen. Dieser weist nicht nur eine hohe mechanische Festigkeit bei geringem Gewicht auf, sondern ist auch chemikalien- und korrosionsbeständig.

Gemäß einer weiteren Ausgestaltung der Erfindung ist vorgesehen, daß die Ausnehmung im Druckaufnahmerohr eine Länge aufweist, die dem vorbestimmten Verschiebeweg - Federweg - der beiden Rohre entspricht.

Damit die Stoßabsorptionselemente die Stoßenergie aufnehmen und umwandeln können, sind die bekannten Stoßabsorptionselemente Gummielemente, die über mehr als 30% ihrer Länge eindrückbar sind, was dadurch erreicht wird, daß zwischen ihnen und dem Druckaufnahmerohr Hohlräume ausgebildet sind, in die der Gummi ausweichen kann. Damit die bekannten Gummielemente sicher in dem Druckaufnahmerohr geführt werden und nicht klappern, weisen sie voneinander beabstandete umlaufende Vorsprünge auf, deren Außendurchmesser dem Innendurchmesser des Drukkaufnahmerohres entspricht. Die zwischen den umlaufenden Vorsprüngen gebildeten Hohlräume werden bei einem Zusammendrücken des Gummmielementes von diesem ausgefüllt. Diese Ausgestaltung der Gummielemente hat jedoch den Nachteil, daß bei einem Zusammenstoß erhebliche partielle Druckstellen auf das Druckaufnahmerohr aufgebracht werden, was zur Folge hat, daß das Rohr entsprechend stark dimensioniert sein muß. Erfindungsgemäß weist das zylinderförmige Stoßabsorptionselement daher eine glatte Außenwand und einen innen liegenden Hohlraum auf. Damit sind bei einem Zusammenstoß zunächst die Kräfte nach innen gerichtet und außerdem erfolgt nur eine geringe, gleichmäßige Flächenpressung auf das Drukkaufnahmerohr. Damit können relativ dünnwandige Kunststoffrohre verwendet werden.

Um die Kräfte gleichmäßig auf die Mantelfläche des Druckaufnahmerohres zu verteilen, ist in Weiterbildung dieses Erfindungsgedankens vorgesehen, daß der Hohlraum mittig entlang der Längsachse des Stoßabsorptionselementes verläuft.

Auch aus herstellungstechnischen Gründen hat es sich als vorteilhaft erwiesen, daß das Stoßabsorptionselement aus Gummi besteht.

Die Montage des erfindungsgemäßen Stoßdämpfers läßt sich noch dadurch vereinfachen, daß der Stopfen und das Stoßabsorptionselement einstückig ausgebildet sind.

Weitere Merkmale, Vorteile und Anwendungsmöglichkeiten der Erfindung ergeben sich aus der nachfolgenden Beschreibung eines Ausführungsbeispieles und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
Fig. 1 in einem Längsschnitt einen erfindungsgemäßen Stoßdämpfer in seiner zusammengebauten Ruhestellung und
Fig. 2 einen Längsschnitt durch das erfindungsgemäße Stoßstangenaufnahmerohr mit einem zwar eingesetzten aber noch nicht in seiner endgültigen Position angeordneten Kunststoffstopfen.

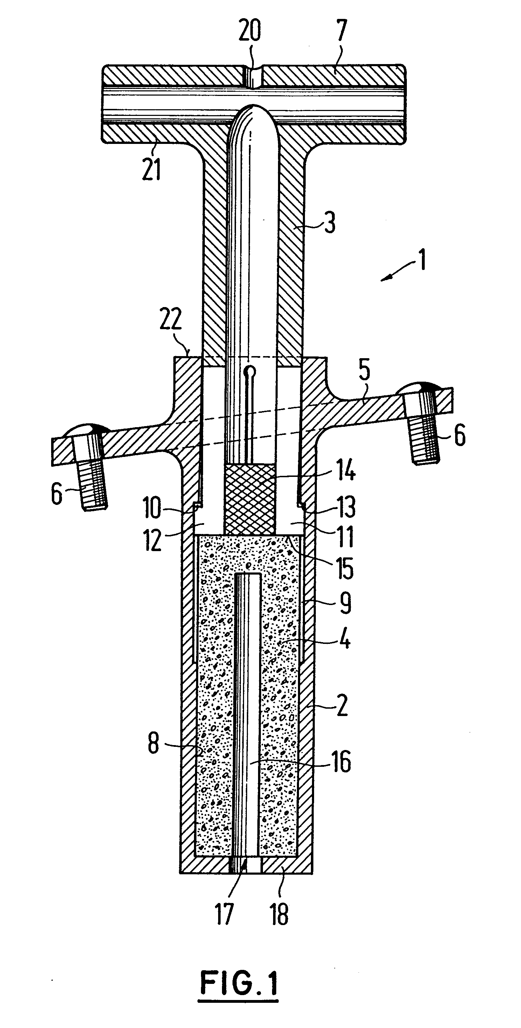

Der in Fig. 1 dargestellte Stoßdämpfer 1 besteht aus einem Druckaufnahmerohr 2 und einem Stoßstangenaufnahmerohr 3, die formschlüssig miteinander verbunden sind. In dem Druckaufnahmerohr 2 ist ein aus Gummi bestehendes Stoßabsorptionselement 4 unter Vorspannung eingesetzt.

Das Druckaufnahmerohr 2 ist über eine Aufnahmeplatte 5 mittels Schrauben 6 an einem nicht dargestellten Rahmen eines Kraftfahrzeuges befestigt. Das Stoßstangenaufnahmerohr 3 ist an seinem T-förmigen Abschlußstück 7 an der ebenfalls nicht dargestellten Stoßstange des Kraftfahrzeuges angebracht.

In der Innenwand 8 des Druckaufnahmerohres 2 ist eine Ausnehmung 9 ausgebildet, die an ihrem vorderen Ende eine als Angriffskante dienende Hinterschneidung 10 aufweist. In die Ausnehmung 9 greift ein am vorderen Endabschnitt 11 des Stoßstangenaufnahmerohres 3 ausgebildeter Vorsprung 12 ein, dessen hintere, in Richtung der Stoßstange zeigende Kante 13 mit der Hinterschneidung 10 in der Ausnehmung 9 im Druckaufnahmerohr 2 in Eingriff gelangt.

Der Vorsprung 12 wird durch einen Kunststoffstopfen 14 in Eingriff mit der Hinterschneidung in der Ausnehmung im Druckaufnahmerohr 2 gehalten. Dabei schließt der Kunststoffstopfen 14 in seiner bestimmungsgemäßen Stellung mit der Stirnfläche 15 des Stoßstangenaufnahmerohres 3 ab.

An der Stirnfläche 15 des Stoßstangenaufnahmerohres 3 und dem Kunststoffstopfen 14 liegt unter Vorspannung das aus Gummi bestehende Stoßabsorptionselement 4 an. Dieses füllt den gesamten Innenraum des Druckaufnahmerohres 2 aus und weist einen innenliegenden Hohlraum 16 auf, der sich entlang der Längsachse des Stoßabsorptionselementes erstreckt und eine Öffnung 17 an dem der Stirnfläche 15 gegenüberliegenden Ende des Stoßabsorptionselementes 4 bildet. Das Stoßabsorptionselement 4 wird durch eine Abschlußwand 18 des Druckaufnahmerohres 2 in diesem gehalten.

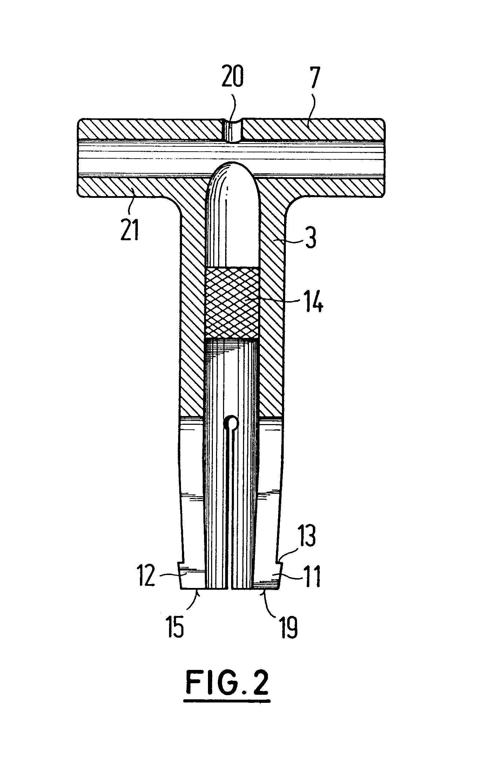

Der Zusammenbau und die Funktionsweise des Stoßdämpfers ist folgende:
In das offene Ende 19 des Stoßstangenaufnahmerohres 3 wird ein leicht konischer Kunststoffstopfen 14 so weit eingeschoben, daß der vordere Endabschnitt 11 des Stoßstangenaufnahmerohres 3 zusammendrückbar ist. Dieses erforderlich, um das ebenfalls aus Kunststoff bestehende Druckaufnahmerohr 2 so weit über das Stoßstangenaufnahmerohr 3 zu schieben, daß der Vorsprung 12 am vorderen Endabschnitt 11 des Stoßstangenaufnahmerohres 3 in die Ausnehmung 9 im Druckaufnahmerohr 2 eingreift. Zuvor wird noch das aus Gummi bestehende Stoßabsorptionselement 4 in das Druckaufnahmerohr 2 eingeschoben. Der Gummipuffer ist dabei so dimensioniert, daß die beiden Rohre 2 und 3 nur miteinander verbunden werden können, wenn sie hydraulisch zusammengedrückt werden. Hierfür wird normmäßig eine Vorspannung von ca. 1800 N gefordert. Damit sich die formschlüssige Verbindung zwischen dem Vorsprung 12 und der Hinterschneidung 10 bei der erheblichen Beanspruchung des Stoßdämpfers 1 nicht von selbst wieder löst, wird der vordere Endabschnitt 11 des Stoßstangenaufnahmerohres 3 durch den Kunststoffstopfen 14 auseinandergedrückt gehalten. Der Kunststoffstopfen 14 wird dazu aus der in Fig. 2 gezeigten Ausgangsstellung durch ein nicht dargestelltes Werkzeug in die in Fig. 1 gezeigte Endstellung bewegt. Dafür ist in dem T-förmigen Abschlußstück 7 des Stoßstangenaufnahmerohres 3 eine Montageöffnung 20 ausgebildet. Durch diese greift das Werkzeug und verschiebt den Kunststoffstopfen 14 bis in seine Endstellung, in der er mit der Stirnfläche 15 des Stoßaufnahmrohres 3 fluchtend an dem Stoßabsorptionselement 4 anliegt. In dieser Stellung wird der Kunststoffstopfen 14 durch Reibschluß gehalten.

Stößt nun ein Kraftfahrzeug, an dem der Stoßdämpfer 1 zwischen einer nicht dargestellten Stoßstange und dem nicht dargestellten Rahmen des Kraftfahrzeuges angeordnet ist, mit einem Gegenstand zusammen, wobei als Normgröße eine Geschwindigkeit von 4 km/h bei 800 bis 1000 kg Fahrzeuglast vorgegeben ist, müssen von dem mit 180 kg vorgespannten Stoßabsorptionselement ca. 50 mm Hub aufgenommen werden, ohne daß eine bleibende Deformierung oder Zerstörung des Stoßdämpfers 1 erfolgt. Der Hub von 50 mm stellt damit einen "Federweg" dar. Um diesen Weg durchlaufen zu können, muß das Stoßstangenaufnahmerohr 3 mindestens diese 50 mm aus dem Druckaufnahmerohr 2 hervorragen, d.h. der Abstand zwischen dem Flansch 21 des T-förmigen Abschlußstückes 7 des Stoßstangenaufnahmerohres 3 und der Stirnfläche 22 des Druckaufnahmerohres 2 muß mindestens diesen Federweg betragen. Gleiches gilt für die Ausnehmung 9 in der Innenwand 8 des Druckaufnahmerohres 2.

In der Praxis endet der Zusammendrückvorgang meistens bereits vor dem normmäßigen Federweg von 50 mm, da das Stoßabsorptionselement 4 bereits vorher vollständig zusammengedrückt ist, was dann der Fall ist, wenn sein Hohlraum 16 vollständig ausgefüllt ist, was wiederum zur Folge hat, daß das Stoßabsorptionselement nicht weiter nachgeben kann und damit eine weitere Bewegung nicht mehr zuläßt. Sollte die Stoßenergie noch nicht verbraucht sein, würde dies zu einer Zerstörung des Stoßdämpfers 1 führen. Dieser wäre dann nicht mehr funktionstüchtig und müßte ausgetauscht werden.

Die Herstellung und Montage des Stoßdämpfers 1 läßt sich dadurch erleichtern, daß gemäß einem nicht dargestellten weiteren Ausführungsbeispiel der Stopfen 14 und das Stoßabsorptionselement 4 einstückig ausgebildet sind.

### Bezugszeichenliste:

1 Stoßdämpfer
2 Druckaufnahmerohr
3 Stoßstangenaufnahmerohr
4 Stoßabsorptionselement
5 Aufnahmeplatte
6 Schrauben
7 T-förmiges Abschlußstück
8 Innenwand
9 Ausnehmung
10 Hinterschneidung
11 vorderer Endabschnitt
12 Vorsprung
13 Kante an 12
14 Kunststoffstopfen
15 Stirnfläche von 3
16 Hohlraum
17 Öffnung in 4
18 Abschlußwand
19 offenes Ende von 3
20 Montageöffnung
21 Flansch
22 Stirnfläche von 22

## Patentansprüche

1. Stoßdämpfer, insbesondere für Stoßstangen von Kraftfahrzeugen oder dgl. mit zwei gegeneinander verschiebbaren Rohren, von denen eines - "Druckaufnahmerohr" - ein Stoßabsorptionselement, insbesondere ein Gummielement, einschließt und über eine Aufnahmeplatte oder dgl. am Rahmen eines Kraftfahrzeuges oder dgl. befestigt ist, während das andere - "Stoßstangenaufnahmerohr" - an der Stoßstange des Kraftfahrzeuges oder dgl. angebracht ist, wobei das Druckaufnahmerohr unter Vorspannung mit dem Stoßstangenaufnahmerohr verbunden ist und die Rohre mindestens bis zu einer vorbestimmten Kraft entlang eines vorbestimmten Weges - "Federweg" - gegeneinander verschiebbar sind, und wobei das Stoßabsorptionselement mindestens bis zu der vorbestimmten Kraft verformbar ist, dadurch gekennzeichnet, daß die beiden Rohre (2, 3) aus Kunststoff bestehen, daß das das Stoßabsorptionselement (4) einschließende Druckaufnahmerohr (2) auf das Stoßstangenaufnahmerohr (3) aufschiebbar ist und daß in der Innenwand (8) des Druckaufnahmerohres (2) eine Ausnehmung (9) ausgebildet ist, in die einen Vorsprung (12) des Stoßstangenaufnahmrohres (3) derart eingreift, daß die beiden Rohre (2, 3) unter Vorspannung miteinander verbunden sind.

2. Stoßdämpfer nach Anspruch 1, dadurch gekennzeichnet, daß der am Stoßstangenaufnahmerohr (2) ausgebildete Vorsprung (12) so angeordnet ist, daß seine hintere Kante (13) mit einer eine Angriffskante bildenden Hinterschneidung (10) in der Ausnehmung (9) im Druckaufnahmerohr (2) in Eingriff gelangt.

3. Stoßdämpfer nach Anspruch 2, dadurch gekennzeichnet, daß der Vorsprung (12) am vorderen Endabschnitt (11) des Stoßstangenaufnahmerohres (3) ausgebildet ist.

4. Stoßdämpfer nach Anspruch 2 oder 3, dadurch gekennzeichnet, daß im Stoßstangenaufnahmerohr (3) ein Stopfen (14) eingesetzt ist, der den den Vorsprung aufweisenden Wandabschnitt des Stoßstangenaufnahmerohres (3), insbesondere dessen Endabschnitt (11) nach außen in Eingriff mit der Hinterschneidung (10) in der Ausnehmung (9) im Druckaufnahmerohr (12) hält.

5. Stoßdämpfer nach Anspruch 4, dadurch gekennzeichnet, daß im hinteren Abschluß (7) des Stoßstangenaufnahmerohres (2) eine Montageöffnung (20) für den Stopfen (14) ausgebildet ist.

6. Stoßdämpfer nach Anspruch 4 oder 5, dadurch gekennzeichnet, daß der Stopfen (14) konisch geformt ist.

7. Stoßdämpfer nach einem der Ansprüche 4 bis 6, dadurch gekennzeichnet, daß der Stopfen (14) ein Kunststoffstopfen ist.

8. Stoßdämpfer nach Anspruch 1 oder 2, dadurch gekennzeichnet, daß die Ausnehmung (9) im Druckaufnahmerohr (2) eine Länge aufweist, die dem vorbestimmten Verschiebeweg - Federweg - der beiden Rohre (2, 3) entspricht.

9. Stoßdämpfer nach Anspruch 1, dadurch gekennzeichnet, daß das zylinderförmige Stoßabsorptionselement (4) eine glatte Außenwand (18) und einen innenliegenden Hohlraum (16) aufweist.

10. Stoßdämpfer nach Anspruch 9, dadurch gekennzeichnet, daß der Hohlraum (16) mittig entlang der Längsachse des Stoßabsorptionselements (4) verläuft.

11. Stoßdämpfer nach Anspruch 9 oder 10, dadurch gekennzeichnet, daß das Stoßabsorptionselement (4) aus Gummi besteht.

12. Stoßdämpfer nach einem der vorherigen Ansprüche, dadurch gekennzeichnet, daß der Stopfen (14) und das Stoßabsorptionselement (4) einstückig ausgebildet sind.
